# EUROPEAN PATENT APPLICATION

(11) **EP 2 657 841 A1**
(43) Date of publication of application: **30.10.2013**
(21) Application number: 11860320.8
(22) Date of filing: 01.09.2011
(51) Int. Cl.: G06F 9/48

(54) **METHOD, DEVICE AND SYSTEM FOR MIGRATING RESOURCES**

(71) Applicant: Huawei Technologies Co., Ltd., Shenzhen, Guangdong 518129 (CN)
(72) Inventor: YE, Yanzhong, Guangdong 518129 (CN); WANG, Wei, Guangdong 518129 (CN); GUO, Hanjun, Guangdong 518129 (CN); QIU, Xishi, Guangdong 518129 (CN)
(74) Representative: Pfenning, Meinig & Partner GbR
(86) International application number: PCT/CN2011/079266
(87) International publication number: WO 2012/119436

(57) **Abstract**

Embodiments of the present invention disclose a method and an apparatus for resource migration, related to the field of processors, to avoid cross-node memory access and cross-node cache access, save inter-node high-speed bandwidth, and improve system performance. The present invention includes: when a node is removed, obtaining a process in the node; determining a destination node to which the process and the memory corresponding to the process are migrated, according to mapping between the process and the memory corresponding to the process, and affinity of the process; and migrate the process in the node and the memory corresponding to the process to the destination node. The embodiments of the present invention are mainly applied to a resource migration procedure.

## Description

The present invention relates to the field of processor technologies, and in particular, to a method, an apparatus and a system for resource migration.

### BACKGROUND

Under a situation that a server system is running, when a device or node is inserted into or removed from the system, normal running of the system cannot be influenced. Currently, a Linux kernel implements an insertion or removal operation on a logic CPU, and performs insertion or removal removal on a memory taking a section (section) as a unit. Currently, the two technical solutions are applied to a procedure where a node is removed, and when the node is removed, memory information in the node is migrated into other idle memories by taking a section as the unit; simultaneously, a process in a logic CPU in the node is migrated into other logic CPUs. The memory information and the process are separately migrated.

In the process of implementing the method, the apparatus and the system for resource migration, the inventor finds that the prior art at least has the following problems: currently, in a procedure that a node is removed, a process in the node and memory information in the node are separately migrated, so the process in the node and the memory information which is in the node and is corresponding to the process are migrated to different nodes, so as to cause cross-node memory access and cross-node cache (cache) access, thereby occupying high-speed bandwidth between nodes, and reducing system performance.

### SUMMARY

Embodiments of the present invention provide a method, an apparatus and a system for resource migration, so as to avoid cross-node memory access and cross-node cache access, save high-speed bandwidth between nodes, and improve system performance.

In order to achieve the above objectives, the embodiments of the present invention adopt the following technical solutions.

A method for resource migration includes:
when a node is removed, obtaining process information in the node, in which the process information includes mapping between a process and a corresponding memory and affinity of the process;
determining a destination node to which the process and the memory corresponding to the process are migrated, according to the mapping between the process and the memory corresponding to the process, and the affinity of the process; and
migrating the process in the node and the memory corresponding to the process to the destination node.

An apparatus for resource migration includes:
a first obtaining unit, configured to, when a node is removed, obtain process information in the node, in which the process information includes mapping between a process and a memory corresponding to the process and affinity of the process;
a first determining unit, configured to determine a destination node to which the process and the memory corresponding to the process are migrated, according to the mapping between the process and the memory corresponding to the process, and the affinity of the process; and
a first migrating unit, configured to migrate the process in the node and the memory corresponding to the process to the destination node.

A system for resource migration includes a plurality of nodes, in which each node includes a CPU and a memory, and the plurality of nodes includes: a to-be-immigrated node, a to-be-emigrated node and a control node, including that:
a CPU on the control node is configured to, when the to-be-emigrated node is removed, obtain process information in the to-be-emigrated node, determine, according to the process information, the to-be-immigrated node to which a process and a memory corresponding to the process are migrated, and migrate the process in the to-be-emigrated node and the memory corresponding to the process to the to-be-immigrated node,
in which the process information includes mapping between the process and the memory corresponding to the process and affinity of the process.

In the method, the apparatus and the system for resource migration provided by the embodiments of the present invention, when a node is removed, a destination node to which a process and a memory corresponding to the process are migrated is determined according to mapping between the process and the memory corresponding to the process and affinity of the process, and the process in the node and the memory corresponding to the process are migrated to the destination node, so that the process in the node and the memory corresponding to the process can be migrated to the same destination node, thereby avoiding cross-node memory access and cross-node cache access, saving inter-node high-speed bandwidth, and improving system performance.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and a person of ordinary skill in the art may still derive other drawings from the accompanying drawings without creative efforts.

FIG. 1 is a flow chart of a method for resource migration provided by Embodiment 1 of the present invention;

FIG. 2 is a flow chart of a method for resource migration provided by Embodiment 2 of the present invention;

FIG. 3 is a flow chart of another method for resource migration provided by Embodiment 2 of the present invention;

FIG. 4 is a flow chart of another method for resource migration provided by Embodiment 2 of the present invention;

FIG. 5 is a schematic diagram of an example of a method for resource migration provided by Embodiment 2 of the present invention;

FIG. 6 is a block diagram of a composition of another apparatus for resource migration provided by Embodiment 3 of the present invention;

FIG. 7 is a block diagram of a composition of another apparatus for resource migration provided by Embodiment 3 of the present invention;

FIG. 8 is a block diagram of a composition of another apparatus for resource migration provided by Embodiment 3 of the present invention;

FIG. 9 is a block diagram of a composition of another apparatus for resource migration provided by Embodiment 3 of the present invention;

FIG. 10 is a block diagram of a composition of another apparatus for resource migration provided by Embodiment 3 of the present invention; and

FIG. 11 is a block diagram of a composition of a system for resource migration provided by Embodiment 3 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

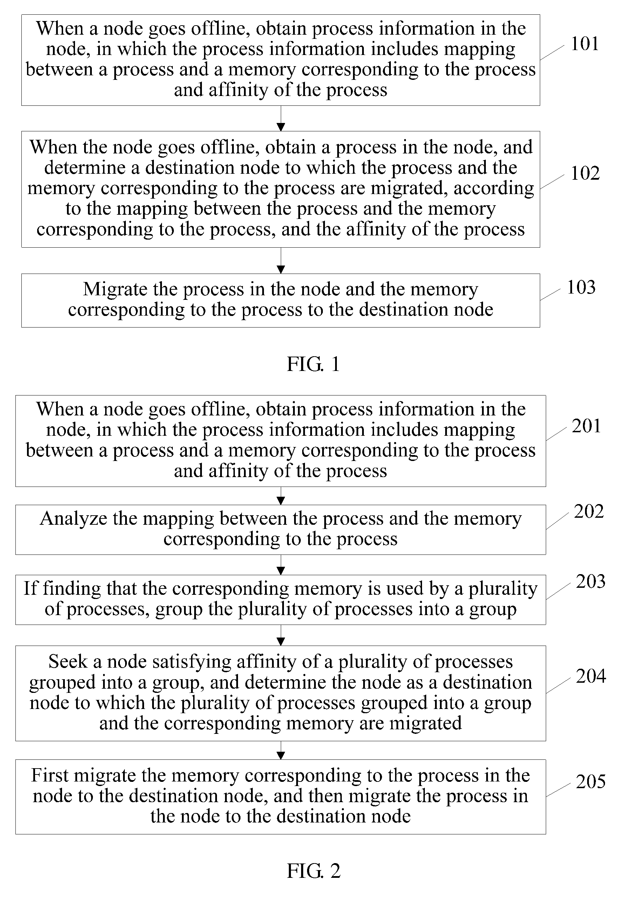

An embodiment of the present invention provides a method for resource migration, and as shown in FIG. 1, the method includes the following steps.

101: When a node is removed, obtain process information in the node, in which the process information includes mapping between a process and a memory corresponding to the process and affinity of the process. The process can find a memory corresponding to the process according to VMA (Virtual Memory Area, virtual memory area) mapping; the affinity is the characteristic that the process is compulsorily executed on some specific CPUs on some specific nodes.

102: Determine a destination node to which the process and the memory corresponding to the process are migrated, according to the mapping between the process and the memory corresponding to the process, and the affinity of the process.

103: Migrate the process in the node and the memory corresponding to the process to the destination node.

It should be noted that, when the process in the node and the memory corresponding to the process are migrated to the destination node, the migration can be implemented by, but not limited to, the following method: migrating the process in the node and the memory corresponding to the process to the destination node according to a priority carried in the process, and preferentially migrating a process whose priority is higher. The embodiment of the present invention imposes no limitation thereto, and a user can perform setting according to a specific requirement.

In the method for resource migration provided by the embodiment of the present invention, when a node is removed, a destination node to which a process and a memory corresponding to the process are migrated is determined according to mapping between the process and the memory corresponding to the process and affinity of the process, and the process in the node and the memory corresponding to the process are migrated to the destination node, so that the process in the node and the memory corresponding to the process can be migrated to the same destination node, thereby avoiding cross-node memory access and cross-node cache access, saving inter-node high-speed bandwidth, and improving system performance.

### Embodiment 2

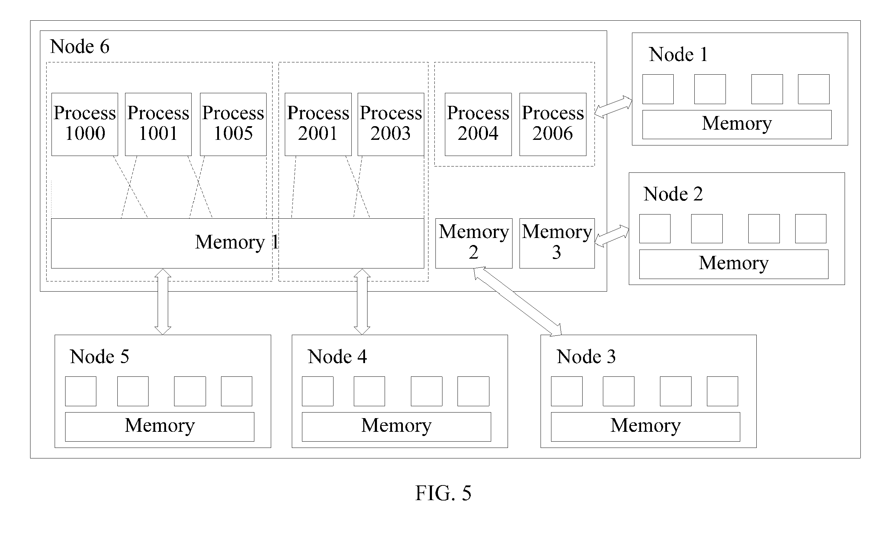

An embodiment of the present invention provides a method for resource migration, and as shown in FIG. 2, specifically taking FIG. 5 as an example for illustration, the method includes the following steps.

201: When a node is removed, obtain process information in the node, in which the process information includes mapping between a process and a memory corresponding to the process and affinity of the process.

Specifically, in FIG. 5, the node 6 is the node to be removed, and the processes 1000, 1001, 1005, 2001, 2003, 2004, and 2006 are the processes in the node.

202: Analyze the mapping between the process and the memory corresponding to the process.

Specifically, in FIG. 5, the memory corresponding to the processes 1000, 1001, and 1005 is located on the memory 1; the memory corresponding to the processes 2001 and 2003 is located on the memory 1; the memory corresponding to the processes 2004 and 2006 is located on the memory of the node 1.

203: If finding that the corresponding memory is used by a plurality of processes, group the plurality of processes into a group.

It should be noted that, the plurality of processes can be grouped into a group according to, but not limited to, the following method, and the method includes: allocating a same identifier to the plurality of processes in each group. The embodiment of the present invention imposes no limitation thereto, and a user can specifically perform setting according to an actual situation.

Specifically, in FIG. 5, a part of the memory on the memory 1 is used by the processes 1000, 1001, and 1005, so the processes 1000, 1001, and 1005 are grouped into a group, and are identified as the group 1; a part of the memory on the memory 1 is used by the processes 2001 and 2003, so the processes 2001 and 2003 are grouped into a group, and are identified as the group 2.

204: Seek a node satisfying affinity of a plurality of processes grouped into a group, and determine the node as a destination node to which the plurality of processes grouped into a group and the corresponding memory are migrated.

Specifically, in FIG. 5, the node 6 and the node 5 are nodes satisfying the affinity of the processes 1000, 1001, and 1005 in the group 1; the node 6 and the node 4 are nodes satisfying the affinity of the processes 2001 and 2003 in the group 1.

Preferentially, in order to avoid that the process in the node 6 and the memory corresponding to the process are migrated in the node 6, the node 5 is selected as a node satisfying the affinity of the processes 1000, 1001, and 1005 in the group 1, and is determined as a destination node to which the processes in the group 1 are migrated; the node 4 is selected as a node satisfying the affinity of the processes 2001 and 2003 in the group 1, and is determined as a destination node to which the processes in the group 2 are migrated.

205: First migrate the memory corresponding to the process in the node to the destination node, and then migrate the process in the node to the destination node.

Specifically, in FIG. 5, the processes 2001 and 2003 in the group 2 are migrated to the node 4; a part of the memory on the memory 1 corresponding to the processes 1000, 1001, and 1005 in the group 1 is migrated to the node 5 first, and then the processes 1000, 1001, and 1005 in the group 1 are migrated to the node 5.

The destination node determined according to the mapping between the process and the memory corresponding to the process and the affinity of the process does not include the node, thereby avoiding that the process and the memory corresponding to the process are migrated in the node, and shortening the time during which the node is removed.

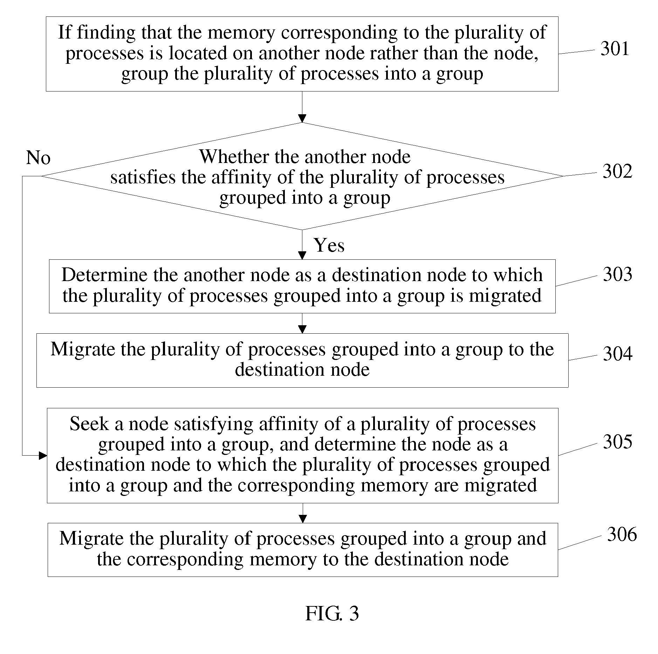

Further, in order to reduce unnecessary memory migration, and shorten the time during which the node is removed, as shown in FIG. 3, specifically taking FIG. 5 as an example for illustration, the method further includes the following steps.

301: If finding that the memory corresponding to the plurality of processes is located on another node rather than the node, group the plurality of processes into a group.

Specifically, in FIG. 5, the memory corresponding to the processes 2004 and 2006 is located on the node 1, so the processes 2004 and 2006 are grouped into a group, which is marked as the group 3.

302: If the another node satisfies the affinity of the plurality of processes grouped into a group, execute step 303; otherwise, execute step 305.

303: Determine the another node as a destination node to which the plurality of processes grouped into a group is migrated.

Specifically, in FIG. 5, if the node 1 satisfies the affinity of the processes 2004 and 2006, the node 1 is determined as a destination node to which the processes in the group 3 are migrated.

304: Migrate the plurality of processes grouped into a group to the destination node.

Specifically, in FIG. 5, the processes 2004 and 2006 in the group 3 are migrated to the node 4.

305: Seek a node satisfying affinity of a plurality of processes grouped into a group, and determine the node as a destination node to which the plurality of processes grouped into a group and the corresponding memory are migrated.

Specifically, in FIG. 5, if the node 1 does not satisfy the affinity of the processes 2004 and 2006, a node, except this node, satisfying the affinity of the processes in the group 3 is sought, and the node is determined as a destination node to which the processes in the group 3 are migrated.

306: Migrate the plurality of processes grouped into a group and the corresponding memory to the destination node.

Specifically, in FIG. 5, the memory which is on the node 1 and is corresponding to the processes 2004 and 2006 in the group 3 is migrated to the destination node first, and then the processes 2004 and 2006 in the group 3 are migrated to the destination node.

A plurality of processes, of the corresponding memory, on another node except the node is grouped into a group, and the plurality of processes is migrated to the another node, so unnecessary memory migration is reduced, and the time during which the node is removed is shortened.

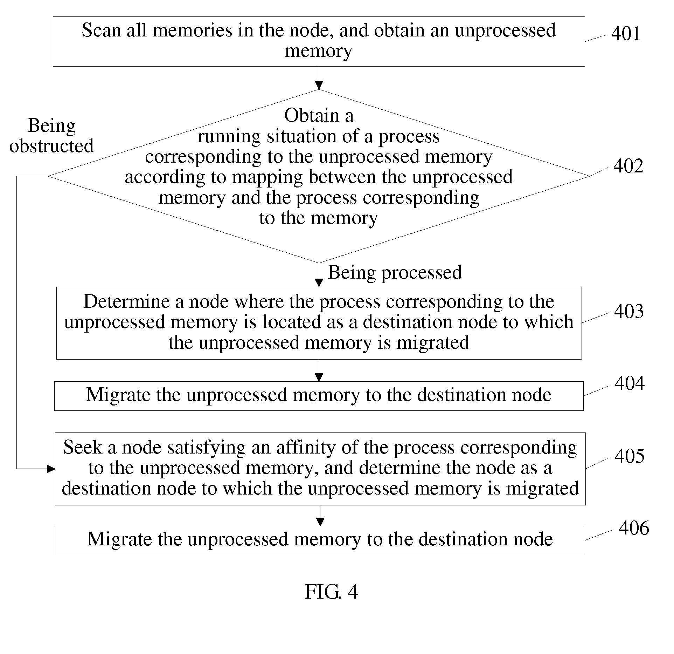

Further, in order to ensure that when the node is removed, all the processes and memories in the node are emigrated, after migration of all the processes in the node and the memories corresponding to the processes is ended, as shown in FIG. 4, specifically taking FIG. 5 as an example for illustration, the method further includes the following steps.

401: Scan all memories in the node, and obtain an unprocessed memory.

Specifically, in FIG. 5, the memory 2 and the memory 3 are unprocessed memories.

402: Obtain a running situation of a process corresponding to the unprocessed memory according to mapping between the unprocessed memory and the process corresponding to the memory; if the running situation is being processed, execute step 403; and if the running situation is being obstructed, execute step 405.

403: Determine a node where the process corresponding to the unprocessed memory is located as a destination node to which the unprocessed memory is migrated.

Specifically, in FIG. 5, the process corresponding to the memory 3 is being processed on the node 2, the node 2 is determined as a destination node to which the memory 3 is migrated.

404: Migrate the unprocessed memory to the destination node.

Specifically, in FIG. 5, the memory 3 is migrated to the node 2.

405: Seek a node satisfying affinity of the process corresponding to the unprocessed memory, and determine the node as a destination node to which the unprocessed memory is migrated.

Specifically, in FIG. 5, the process corresponding to the memory 2 is in an obstructed status, a node satisfying the affinity of the process corresponding to the memory 2 is sought; if the node 3 is sought as a node satisfying the affinity of the process corresponding to the memory 2, the node 3 is determined as a destination node to which the memory 2 is migrated.

406: Migrate the unprocessed memory to the destination node.

Specifically, in FIG. 5, the memory 2 is migrated to the node 3.

after all the processes in the node and the memories corresponding to the processes are completely migrated, the node is scanned, an unprocessed memory is obtained, and a destination node to which the unprocessed memory is migrated is determined, and migration is performed, so that when the node is removed, all the processes and memories in the node are completely emigrated, so as to ensure that no information is lost when the node is removed.

In the method for resource migration provided by the embodiments of the present invention, when a node is removed, a destination node to which a process and a memory corresponding to the process are migrated is determined according to mapping between the process and the memory corresponding to the process and affinity of the process, and the process in the node and the memory corresponding to the process are migrated to the destination node, so that the process in the node and the memory corresponding to the process can be migrated to the same destination node, thereby avoiding cross-node memory access and cross-node cache access, saving inter-node high-speed bandwidth, and improving system performance.

### Embodiment 3

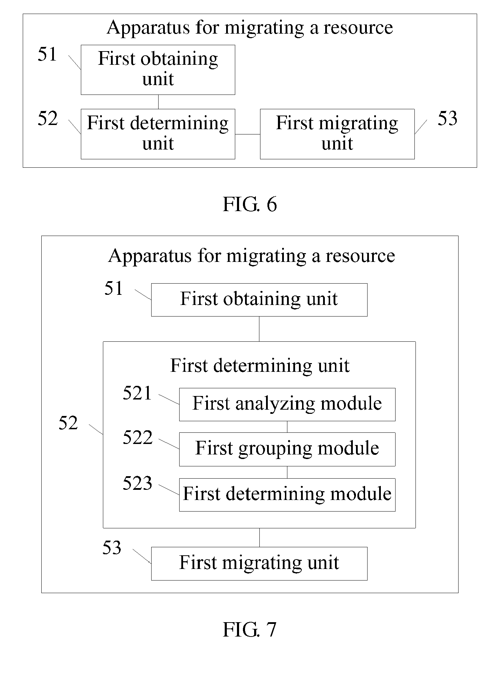

An embodiment of the present invention provides an apparatus for resource migration, and as shown in FIG. 6, the apparatus includes: a first obtaining unit 51, a first determining unit 52, and a first migrating unit 53.

The first obtaining unit 51 is configured to, when a node is removed, obtain process information in the node, in which the process information includes mapping between a process and a memory corresponding to the process and affinity of the process.

The first determining unit 52 is configured to determine a destination node to which the process and the memory corresponding to the process are migrated, according to the mapping between the process and the memory corresponding to the process, and the affinity of the process which are obtained by the first obtaining unit 51, in which the destination node does not include the node.

The first migrating unit 53 is configured to migrate the process in the node and the memory corresponding to the process to the destination node determined by the first determining unit 52.

It should be noted that, when the process in the node and the memory corresponding to the process are migrated to the destination node, the migration can be implemented by, but not limited to, the following method: migrating, according to a priority carried in the process, the process in the node and the memory corresponding to the process to the destination node determined by the first determining unit 52, and preferentially migrating a process whose priority is higher. The embodiment of the present invention imposes no limitation thereto, and a user can perform setting according to a specific requirement.

An embodiment of the present invention provides an apparatus for resource migration, and as shown in FIG. 7, the first determining unit 52 includes: a first analyzing module 521, a first grouping module 522, and a first determining module 523.

The first analyzing module 521 is configured to analyze the mapping between the process and the memory corresponding to the process.

The first grouping module 522 is configured to, when the first analyzing module 521 finds that the corresponding memory is used by a plurality of processes, group the plurality of processes into a group.

The first determining module 523 is configured to seek a node satisfying affinity of the plurality of processes grouped by the first grouping module 522 into a group, and determine the node as a destination node to which the plurality of processes grouped by the first grouping module 522 into a group and the corresponding memory are migrated.

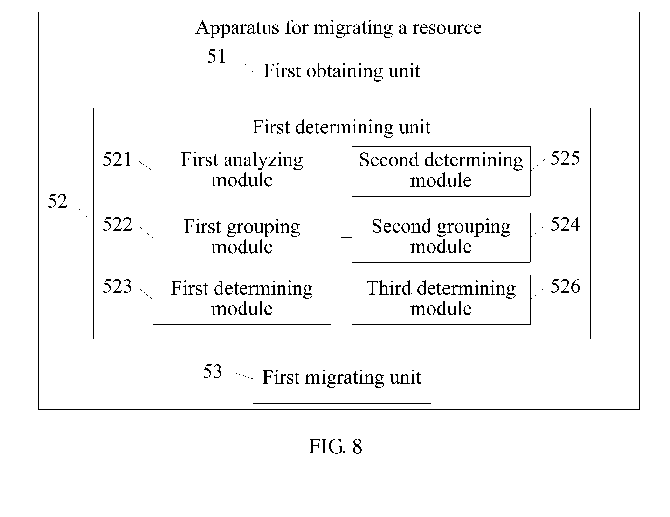

An embodiment of the present invention provides an apparatus for resource migration, and as shown in FIG. 8, the first determining unit 52 further includes: a second grouping module 524, a second determining module 525, and a third determining module 526.

The second grouping module 524 is configured to, when the first analyzing module 521 finds that a memory corresponding to a plurality of processes is located at another node except the node, group the plurality of processes into a group.

The second determining module 525 is configured to, when the another node satisfies affinity of the plurality of processes, determine the another node as a destination node to which the plurality of processes grouped by the second grouping module 524 into a group is migrated.

The third determining module 526 is configured to, when the another node does not satisfy the affinity of the plurality of processes, seek a node satisfying the affinity of the plurality of processes grouped by the second grouping module 524 into a group, and determine the node as a destination node to which the plurality of processes grouped by the second grouping module 524 into a group and the corresponding memory are migrated.

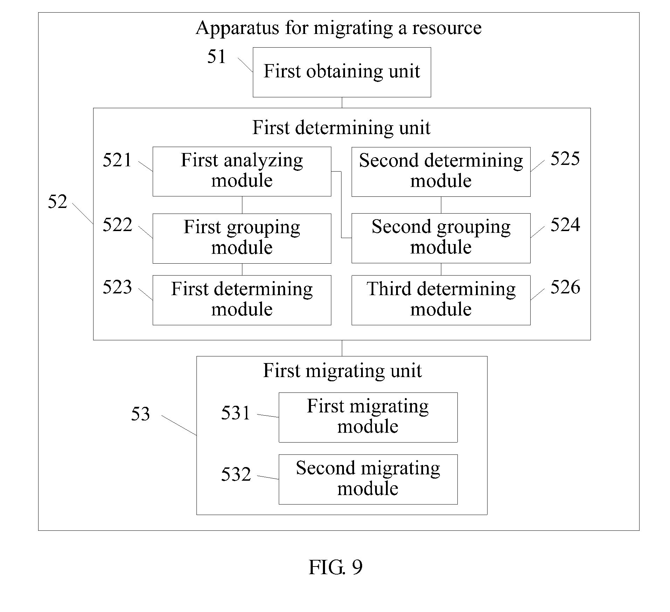

An embodiment of the present invention provides an apparatus for resource migration, and as shown in FIG. 9, the first migrating unit 53 includes: a first migrating module 531, and a second migrating module 532.

The first migrating module 531 is configured to, when neither the process in the node nor the memory corresponding to the process is located at the destination node determined by the first determining unit 52, first migrate the memory corresponding to the process in the node to the destination node determined by the first determining unit 52, and then migrate the process in the node to the destination node determined by the first determining unit 52.

The second migrating module 532 is configured to, when the memory corresponding to the process in the node is located at the destination node determined by the first determining unit 52, migrate the process in the node to the destination node determined by the first determining unit 52.

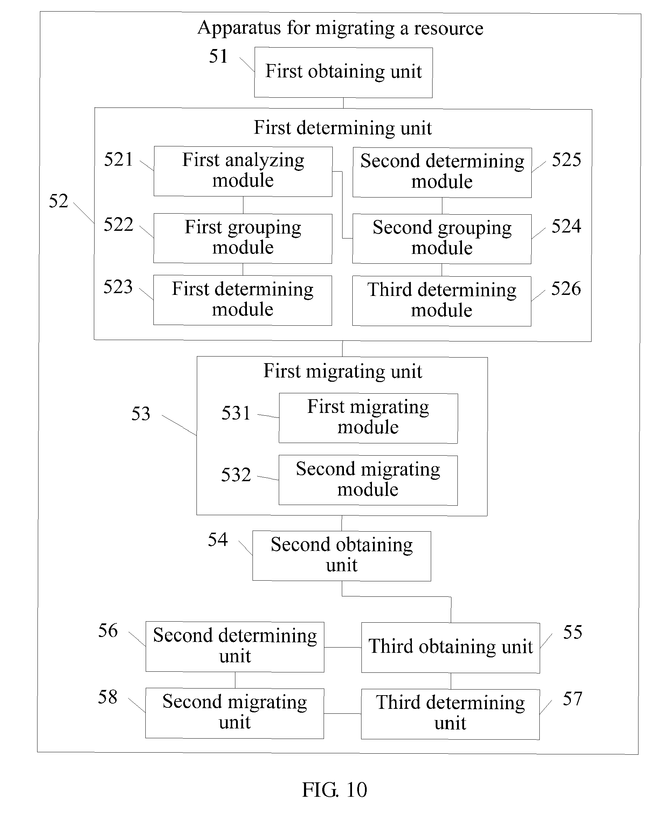

An embodiment of the present invention provides an apparatus for resource migration, and as shown in FIG. 10, the apparatus further includes: a second obtaining unit 54, a third obtaining unit 55, a second determining unit 56, a third determining unit 57, and a second migrating unit 58.

The second obtaining unit 54 is configured to scan all memories in the node, and obtain an unprocessed memory.

The third obtaining unit 55 is configured to, according to mapping between the unprocessed memory obtained by the second obtaining unit 54 and a process corresponding to the unprocessed memory, obtain a running situation of the process corresponding to the unprocessed memory obtained by the second obtaining unit 54.

The second determining unit 56 is configured to, when the running situation obtained by the third obtaining unit 55 is being processed, determine a node where the process corresponding to the unprocessed memory is located as a destination node to which the unprocessed memory is migrated.

The third determining unit 57 is configured to, when the running situation obtained by the third obtaining unit 55 is being obstructed, seek a node satisfying affinity of the process corresponding to the unprocessed memory, and determine the node as a destination node to which the unprocessed memory is migrated.

The second migrating unit 58 is configured to migrate the unprocessed memory to the destination node determined by the second determining unit 56 or the third determining unit 57.

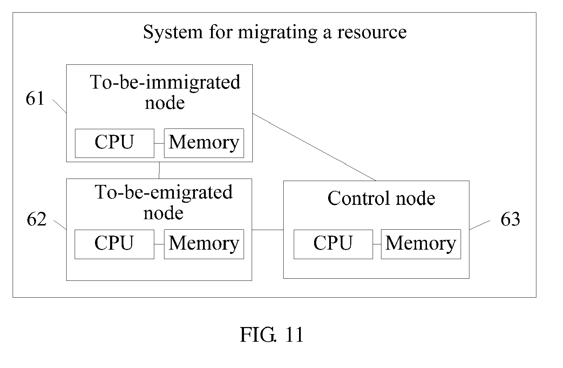

An embodiment of the present invention provides a system for resource migration, the system includes a plurality of nodes, and each node includes a CPU and a memory. As shown in FIG. 11, the system includes: a to-be-immigrated node 61, a to-be-emigrated node 62, and a control node 63.

A CPU on the control node 63 is configured to, when the to-be-emigrated node 62 is removed, obtain process information in the to-be-emigrated node 62, in which the process information includes mapping between a process and a memory corresponding to the process and affinity of the process; determine the to-be-immigrated node 61 to which the process and the memory corresponding to the process are migrated, according to the mapping between the process and the memory corresponding to the process, and the affinity of the process; and migrate the process in the to-be-emigrated node 62 and the memory corresponding to the process to the to-be-immigrated node 61.

The CPU on the control node 63 is further configured to scan all memories in the to-be-emigrated node 62, obtain an unprocessed memory, and obtain, according to mapping between the unprocessed memory and a process corresponding to the unprocessed memory, a running situation of the process corresponding to the unprocessed memory; when the running situation is being processed, determine a node where the process corresponding to the unprocessed memory is located is the to-be-immigrated node 61 to which the unprocessed memory is migrated; when the running situation is being obstructed, seek a node satisfying affinity of the process corresponding to the unprocessed memory, determine the node as the to-be-immigrated node 61 to which the unprocessed memory is migrated, and migrate the unprocessed memory to the to-be-immigrated node 61.

It should be noted that, for the specific manner of how the CPU on the control node 63 executes this technical solution, reference can be made to the description manner of how the apparatus for resource migration executes this technical solution, and details are not repeated herein again.

In the apparatus and the system for resource migration provided by the embodiments of the present invention, when a node is removed, a destination node to which a process and a memory corresponding to the process are migrated is determined according to mapping between the process and the memory corresponding to the process and affinity of the process, and the process in the node and the memory corresponding to the process are migrated to the destination node, so that the process in the node and the memory corresponding to the process can be migrated to the same destination node, thereby avoiding cross-node memory access and cross-node cache access, saving inter-node high-speed bandwidth, and improving system performance.

Further, a plurality of processes, of the corresponding memory, on another node except the node is grouped into a group, and the plurality of processes is migrated to the another node, so unnecessary memory migration is reduced. Meanwhile, the destination node determined according to the mapping between the process and the memory corresponding to the process and the affinity of the process does not include the node, thereby avoiding that the process and the anticipated corresponding memory are migrated in the node. Unnecessary memory migration is reduced and migration in the node is avoided, so the time during which the node is removed is shortened.

Further, after all the processes in the node and the memories corresponding to the processes are completely migrated, the node is scanned, an unprocessed memory is obtained, and a destination node to which the unprocessed memory is migrated is determined, and migration is performed, so that when the node is removed, all the processes and memories in the node are completely emigrated, so as to ensure that no information is lost when the node is removed.

Through the foregoing description of the embodiments, it is clear to a person skilled in the art that the present invention may be implemented by software plus necessary universal hardware, and definitely may also be implemented by hardware, but in many cases, the software implementation is preferred. Based on such understanding, the technical solutions of the present invention essentially, or the part contributing to the prior art may be implemented in a form of a software product. The computer software product is stored in a readable storage medium, for example, a floppy disk, hard disk, or optical disk of the computer, and includes several instructions for instructing a computer device (which may be a personal computer, a server, or a network device) to perform the method described in the embodiments of the present invention.

The foregoing description is merely about specific embodiments of the present invention, but is not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for resource migration, comprising:
when a node is removed, obtaining process information in the node, wherein the process information comprises mapping between a process and a memory corresponding to the process and affinity of the process;
determining a destination node to which the process and the memory corresponding to the process are migrated, according to the mapping between the process and the memory corresponding to the process, and the affinity of the process; and
migrating the process in the node and the memory corresponding to the process to the destination node.

2. The method for resource migration according to claim 1, wherein the destination node is a to-be-immigrated node, the node is a to-be-emigrated node, and the to-be-immigrated node and the to-be-emigrated node are not the same node.

3. The method for resource migration according to claim 1, wherein determining a destination node to which the process and the memory corresponding to the process are migrated, according to the mapping between the process and the memory corresponding to the process, and the affinity of the process, comprises:
analyzing the mapping between the process and the memory corresponding to the process;
if finding that the corresponding memory is used by a plurality of processes, grouping the plurality of processes into a group; and
seeking a node satisfying affinity of a plurality of processes grouped into a group, and determining the node as a destination node to which the plurality of processes grouped into a group and the corresponding memory are migrated.

4. The method for resource migration according to claim 3, wherein after analyzing the mapping between the process and the memory corresponding to the process, the method further comprises:
if the memory corresponding to a plurality of processes is located on another node rather than the node, grouping the plurality of processes into a group;
if the another node satisfies affinity of the plurality of processes grouped into a group, determining the another node as a destination node to which the plurality of processes grouped into a group is migrated; and
if the another node does not satisfy the affinity of the plurality of processes grouped into a group, seeking a node satisfying the affinity of the plurality of processes grouped into a group, and determining the node as a destination node to which the plurality of processes grouped into a group and the corresponding memory are migrated.

5. The method according to claim 1, wherein migrating the process in the node and the memory corresponding to the process to the destination node, comprises:
migrating the process in the node and the memory corresponding to the process to the destination node according to a priority carried in the process.

6. The method for resource migration according to claim 1, wherein migrating the process in the node and the memory corresponding to the process to the destination node, comprises:
if neither the process in the node nor the memory corresponding to the process is located at the destination node, first migrating the memory corresponding to the process in the node to the destination node, and then migrating the process in the node to the destination node; and
if the memory corresponding to the process in the node is located at the destination node, migrating the process in the node to the destination node.

7. The method for resource migration according to any one of claims 1 to 6, wherein after the migrating the process in the node and the memory corresponding to the process to the destination node, the method further comprises:
scanning all memories in the node, and obtaining an unprocessed memory;
obtaining a running situation of a process corresponding to the unprocessed memory according to mapping between the memory and the process corresponding to the memory;
if the running situation is being processed, determining a node where the process corresponding to the unprocessed memory is located as a destination node to which the unprocessed memory is migrated;
if the running situation is being obstructed, seeking a node satisfying affinity of the process corresponding to the unprocessed memory, and determining the node as a destination node to which the unprocessed memory is migrated; and
migrating the unprocessed memory to the destination node.

8. An apparatus for resource migration, comprising:
a first obtaining unit, configured to, when a node is removed, obtain process information in the node, wherein the process information comprises mapping between a process and a memory corresponding to the process and affinity of the process;
a first determining unit, configured to determine a destination node to which the process and the memory corresponding to the process are migrated, according to the mapping between the process and the memory corresponding to the process, and the affinity of the process which are obtained by the first obtaining unit; and
a first migrating unit, configured to migrate the process in the node and the memory corresponding to the process to the destination node determined by the first determining unit.

9. The apparatus for resource migration according to claim 8, further comprising:
a second obtaining unit, configured to scan all memories in the node, and obtain an unprocessed memory;
a third obtaining unit, configured to, according to mapping between the unprocessed memory obtained by the second obtaining unit and a process corresponding to the unprocessed memory, obtain a running situation of the process corresponding to the unprocessed memory obtained by the second obtaining unit;
a second determining unit, configured to, when the running situation obtained by the third obtaining unit is being processed, determine a node where the process corresponding to the unprocessed memory is located as a destination node to which the unprocessed memory is migrated;
a third determining unit, configured to, when the running situation obtained by the third obtaining unit is being obstructed, seek a node satisfying affinity of the process corresponding to the unprocessed memory, and determine the node as a destination node to which the unprocessed memory is migrated; and
a second migrating unit, configured to migrate the unprocessed memory to the destination node determined by the second determining unit or the third determining unit.

10. A system for resource migration, comprising a plurality of nodes, wherein each node comprises a CPU and a memory, and the plurality of nodes comprises: a to-be-immigrated node, a to-be-emigrated node and a control node, wherein comprising that:
a CPU on the control node is configured to, when the to-be-emigrated node is removed, obtain process information in the to-be-emigrated node, determine, according to the process information, the to-be-immigrated node to which a process and a memory corresponding to the process are migrated, and migrate the process in the to-be-emigrated node and the memory corresponding to the process to the to-be-immigrated node node,
wherein the process information comprises mapping between the process and the memory corresponding to the process and affinity of the process.

11. The system for resource migration according to claim 10, wherein comprising that:
the CPU on the control node is further configured to scan all memories in the to-be-emigrated node, obtain an unprocessed memory, and obtain, according to mapping between the unprocessed memory and a process corresponding to the unprocessed memory, a running situation of the process corresponding to the unprocessed memory; when the running situation is being processed, determine a node where the process corresponding to the unprocessed memory is located is a to-be-immigrated node to which the unprocessed memory is migrated; when the running situation is being obstructed, seek a node satisfying affinity of the process corresponding to the unprocessed memory, determine the node as a to-be-immigrated node to which the unprocessed memory is migrated, and migrate the unprocessed memory to the to-be-immigrated node.
